# EUROPÄISCHE PATENTSCHRIFT

(11) **EP 3 534 476 B1**
(45) Veröffentlichungstag und Bekanntmachung des Hinweises auf die Patenterteilung: **03.08.2022**
(21) Anmeldenummer: 19160350.5
(22) Anmeldetag: 01.03.2019
(51) Int. Cl.: H02G 3/12, H02G 3/18

(54) **INSTALLATIONSDOSE**
INSTALLATION BOX
BOÎTE D'INSTALLATION

(30) Priorität: 02.03.2018 DE 202018101204 U
(43) Veröffentlichungstag der Anmeldung: 04.09.2019
(73) Patentinhaber: Kaiser GmbH & Co. KG, 58579 Schalksmühle (DE)
(72) Erfinder: KAISER, Burkard, 58509 Lüdenscheid (DE)
(74) Vertreter: Rentsch Partner AG

(56) Entgegenhaltungen:
- EP-A1- 2 940 815
- DE-A1- 10 101 475
- DE-U1-202016 101 962
- FR-A1- 2 708 135
- GB-A- 1 503 835
- US-B1- 6 511 269
- KAISER GmbH & Co. Elektroinstallation: "Betoninbouwbehuizing HaloX - prefabbouw", , 14 November 2017 (2017-11-14), page 1, XP054981469, Retrieved from the Internet: URL:https://www.youtube.com/watch?v=-w9jF8 8UWAY [retrieved on 2021-02-25]

## Beschreibung

### TECHNISCHES GEBIET

Die Erfindung betrifft eine Installationsdose für elektrische Anschlüsse.

### HINTERGRUND DER ERFINDUNG

In Bauwerken aus Beton werden für das Anbringen elektrischer Schalter, Steckdosen, Lampen, Apparate oder für Verzweigungen an den dazu vorgesehenen Stellen im Gebäude Installationsdosen verwendet, welche einbetoniert werden. Unter Installationsdosen werden beispielsweise Einlasskästen, Deckendübel, Unterputzdosen, Verteilerdosen, Leuten- oder Lautsprechereinbaugehäuse und dergleichen verstanden. Solche Installationsdosen weisen typischerweise ein zylinder- oder quaderförmiges Gehäuse mit Boden und/oder Deckel auf, welche einen über eine Installationsöffnung zugänglichen Installationsraum ausbilden. Je nach Ausführungsform kann die Installationsöffnung durch einen Deckel verschlossen werden. Umfangsseitig in der Seitenwand oder im Boden weisen diese Installationsdosen zudem oft eine Mehrzahl von Muffen und Adaptern auf, welche typischerweise zur Befestigung von Plastikrohren, insbesondere Wellrohren, zur Durchführung von Anschlusskabeln vorgesehen sind.

Der Einbau der Installationsdose im Bereich einer Betonoberfläche (Wände, Decken, Böden) erfolgt vor dem Betonieren. Herkömmliche Installationsdosen werden beispielsweise mit Nägeln oder mittels Heisskleber derart an einem Schalungselement befestigt, dass ihre Installationsöffnung der Schalung zugewandt ist. Weiterhin sind Lösungen bekannt, bei denen die Installationsdosen mittels Magneten an einer Metallschalung der Betonwand befestigt werden können. Dies ist vorteilhaft, da die Position der Installationsdose auch nach der initialen Befestigung noch leicht wieder verändert werden kann. Die Befestigung an Metallschalungen erfolgt zudem immer häufiger in Betongiesswerken, welche auf die Fertigung von vorgefertigten Elemente und Baugruppen spezialisiert sind. Z.B. werden Decken und Wandelemente mit mehreren Metern Länge und Breite so vorgefertigt, dass sie auf der Baustelle einfach montiert und zusammengefügt werden können. Bei diesen vorgefertigten Elementen und Baugruppen werden zumindest die Verrohrung für die Elektrokabel und/oder Wasserleitungen, etc. bereits im Werk verlegt und dann eingegossen. Dabei kommen mit Vorteil Schalungen aus Metall zum Einsatz, welche es erlauben die einzubringenden Elemente mittels Magneten temporär auf der Oberfläche der späteren Wand zu befestigen.

Aus dem Stand der Technik sind Installationsdosen bekannt, in welche Permanentmagnete fest eingebaut sind. Diese können in der Dose selbst oder in einem Deckel der Dose, welcher typischerweise die Installationsöffnung der Installationsdose vor dem Eindringen von flüssigem Beton schützt, angebracht sein. In der Vergangenheit wurden diese Magnete zunächst vorzugsweise so eingebettet, dass diese nach dem Giessen des Betons aus Kostengründen wiederverwendet werden konnten. Beispiele für eine solche Technologie sind z.B. die EP1848080B1 oder die DE4220720A1**,** wo entweder nur der Magnet oder dieser gemeinsam mit einer dafür vorgesehenen Haltevorrichtung wiederverwendet werden kann. Das Video "Betoninbouwbehuizing HaloX - prefabbouw" von KAISER GmbH & Co. Elektroinstallation mit der Url https://www.youtube.com/watch?v=-w9jF88UWAY und das Dokument DE 20 2016 101962 U1 offenbaren Installationsdosen, die einen Magneten enthalten.

Ein Nachteil der aus dem Stand der Technik bekannten Dosen besteht darin, dass der Magnet nur schwer wieder entfernt werden kann.

### DARSTELLUNG DER ERFINDUNG

Eine Aufgabe der Erfindung besteht darin eine verbesserte Installationsdose zu zeigen, welche einfach und sicher eine temporäre Fixierung an einer magnetischen Oberfläche ermöglicht.

Die erfindungsgemässe Installationsdose umfasst in der Regel einen Dosenkörper mit einer Installationsöffnung, welche bei Bedarf durch einen Deckel verschlossen werden kann. Der Dosenkörper weist eine Dosenwand auf, welche einen Installationsraum umgibt, der über die Installationsöffnung von aussen zugänglich ist. Weiterhin kann diese Dose einen fest mit der Dosenwand verbundenen Dosenboden aufweisen. Alternativ kann der Dosenboden auch als abnehmbarer Deckel ausgestaltet sein, welcher über eine zweite Installationsöffnung einen Zugang zum Installationsraum ermöglicht. Zumindest einer der Deckel kann über ein Scharnier mit der Dosenwand wirkverbunden sein. Beim Scharnier kann es sich beispielsweise um ein Bandscharnier handeln, welches die Dosenwand und den entsprechenden Deckel integral verbindet. Der Dosenboden und/oder der Deckel können an einer von dem Installationsraum wegweisenden Montageseite eine Vertiefung aufweisen, welche zur temporären Aufnahme eines Magneten dient. Um die Vertiefung kann ein umlaufender Rand angeordnet sein, welcher direkt an den Magneten angrenzt oder in einem gewissen Abstand von diesem angeordnet ist. Der Rand kann im montierten Zustand als Auflage- bzw. Dichtungsmittel des Deckels gegenüber der Schalung dienen und verhindern, dass beim Vergiessen Beton auf eine von dem umlaufenden Rand umgebene Fläche gelangt bzw. bis zum Magneten vordringt. Der Dosenboden und/oder der Deckel umfassen ein Befestigungsmittel, welches zur temporären Halterung des Magnets gegenüber dem Deckel, bzw. der Dose dient. Die erfindungsgemässe Befestigung erfolgt durch Formschluss (mittels Hinterschnitt) und kann zusätzlich auch über einen Reibschluss (wie z.B. eine Klemmung) erfolgen. Das oder die Befestigungsmittel für den Magneten, sind hierzu - wie nachfolgend genauer erläutert wird - mit Vorteil im Bereich der Vertiefung oder angrenzend an diese angeordnet. Das Befestigungsmittel wirkt in einer Entnahmerichtung des Magnets mit diesem über einen Hinterschnitt zusammen, welcher den Magneten in der Entnahmerichtung bis zum Erreichen eines definierten Kraftniveaus hält und danach freigibt. Die Entnahmerichtung ist dabei mit Vorteil senkrecht zur Schalungswand angeordnet. Andere Ausgestaltungen sind möglich. Das Kraftniveau ist dabei mit Vorteil tiefer angesetzt als die Haltekraft des Magnets gegenüber der Schalung. Gute Resultate werden erzielt, wenn das Kraftniveau 30% bis 60% der Haltekraft des Magnets entspricht. Je nach Anwendungsgebiet kann das Befestigungsmittel auf der Innenseite des Deckels und/oder des Dosenbodens im Installationsraum der Dose angeordnet sein. Der Magnet ist mit dem Befestigungsmittel über einen Zapfen wirkverbunden. Der Deckel und/oder der Dosenboden können bei Bedarf zwischen der Vertiefung und dem Befestigungsmittel eine Durchgangsöffnung aufweisen. Die Durchgangsöffnung kann in einer membranartigen Trennwand angeordnet sein, welche selber als Befestigungsmittel dient oder Bestandteil desselben ist.

In einer Variante umfasst das Befestigungsmittel eine oder mehrere nach innen abstehende, zumindest bereichsweise deformierbare Rippen. Die Rippen sind so ausgestaltet und angeordnet, dass sie den an dem Magneten befestigten Zapfen kontrolliert halten und erst beim Erreichen des oben beschriebenen Kraftniveaus in Entnahmerichtung freigeben. Der Hinterschnitt weist mit Vorteil in Entformungsrichtung eine gewisse Schräge auf. Der Winkel der Schräge ist mit Bezug auf die Entformungsrichtung so gewählt, dass das Kraftniveau bei der Entnahme nicht überschritten wird. Die Schräge kann an der Rippe ausgebildet sein. Je nach Ausführungsform können die Rippen radia| nach innen weisen oder in einem Winkel zu einer Innenseite der Durchgangsöffnung stehen, so dass die Rippen nicht in Richtung einer Mittelachse zeigen. Für einen guten Halt des Magnets in dem Deckel und/oder dem Dosenboden sind die Rippen mit Vorteil zumindest teilweise verformbar, so dass je nach Durchmesser eines durchzuführenden Zapfens die Rippen ihren Winkel verändern können und so den jeweiligen Zapfen optimal festlegen (klemmen). Für eine einfache Herstellung mittels Spritzguss ist es zudem vorteilhaft, wenn die Rippen in einer Entformungsrichtung des Spritzgusswerkzeuges hinterschnittfrei entformbar sind.

Je nach Ausgestaltung umfassen der Deckel und/oder der Dosenboden Haltemittel zum Halten des Deckels und/oder des Dosenbodens an der Dosenwand.

In der Regel ist der Magnet, welcher zur Halterung des Deckels, bzw. der Dose dient, im Zentrum des Deckels angeordnet. Je nach Ausgestaltung kann aber auch mehr als ein Magnet vorgesehen werden. Angrenzend an den oder die Magnete kann der Deckel auf der Montageseite, welche im montierten Zustand der Schalung zugewendet ist, eine strukturierte Fläche aufweisen, welche so ausgestaltet ist, dass daran nach dem Vergiessen Verputz besser haftet. Die strukturierte Fläche weist mit Vorteil eine Struktur auf, welche Vertiefungen und/oder Erhebungen umfasst. Bevorzugterweise liegt die strukturierte Fläche hierbei auf dem der Deckel und/oder der Dosenboden zwischen dem umlaufenden Rand und dem Magneten.

Um eine Position der Installationsdose in der verputzen Wand besser auswindig machen zu können, kann die Vertiefung auf der Montageseite (nach dem Entfernen des Magnets durch die Schalung) ebenfalls dazu genutzt werden eine Anzeigevorrichtung aufzunehmen. Vordem Verputzen der Wand, kann in die Vertiefung des Deckels ein entsprechend geformter Einsatz eingelassen werden. Der Einsatz kann eine Anzeigevorrichtung umfassen, welche nach dem Verputzen des Deckels aus dem Putz hervorsteht und einem Monteur anzeigt, an welcher Position der verputzen Wand sich die Installationsdose befindet.

Zur Montage einer oder mehrerer entsprechenden Installationsdosen, wie zuvor beschrieben, können verschiedene Installationsdosen ohne einen darin verbauten Magneten mit einem einzelnen von den Installationsdosen losgelösten Magneten, wie zuvor beschrieben, verwendet werden. Dadurch, dass der Magnet nach dem Giessen und Aushärten der Betonwand von den Installationsdosen abgetrennt wird, kann dieser in Kombinationen mit verschiedenen Dosen (ohne entsprechend verbauten Magneten) wiederverwertet werden. Somit kann ein Installationskit geeignet zur wiederholten Verwendung eines Magnets bereitgestellt werden mit mindestens einer Installationsdose ohne eingebauten Magneten und einen davon losgelösten einzelnen Magneten.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante einer Installationsdose 1 gemäss der Erfindung in einer perspektivischen Ansicht mit einem Deckel 3 losgelöst von einem Dosenkörper 2;
- Fig. 2: der Deckel 3 gemäss Figur 1 mit einem Magneten 10 in einem auseinandergebauten Zustand in einer perspektivischen Ansicht von oben;
- Fig. 3: der Deckel 3 gemäss Figur 1 mit einem Magneten 10 in einem zusammengebauten Zustand in einer perspektivischen Ansicht von unten;
- Fig. 4: der Deckel 3 gemäss Figur 3 in dem zusammengebauten Zustand in einer Ansicht von oben;
- Fig. 5: der Deckel 3 in dem zusammengebauten Zustand in einer Schnittansicht gemäss Figur 4;
- Fig. 6: ein Deckels 3 einer Installationsdose 1 gemäss Figur 1 mit einem Einsatz 27 und einer Anzeigevorrichtung 28.

### BESCHREIBUNG DER AUSFÜHRUNGSFORMEN

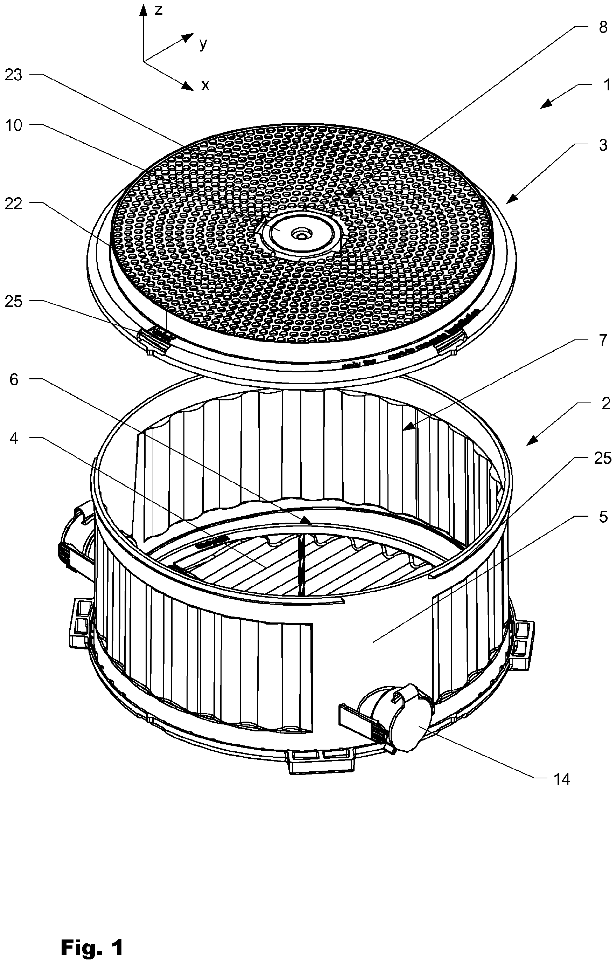

**Figur 1** zeigt eine Variante einer erfindungsgemässen Installationsdose 1. Die Installationsdose umfasst einen Dosenkörper 2 und einen Deckel 3, welche in einem auseinandergebauten Zustand dargestellt sind. Der Dosenkörper 2 umfasst einen Dosenboden 4 und eine an den Dosenboden 4 angrenzende Dosenwand 5, welche gemeinsam einen Installationsraum 6 bilden. An der Dosenwand 5 befindet sich zur Einführung von Kabeln oder Rohren in den Installationsraum 6 ein bzw. mehrere Rohreinführung 14. Dem Dosenboden 4 gegenüberliegend befindet sich eine Installationsöffnung 7 welche Zugang zum Installationsraum 6 erlaubt und von dem Deckel 3 in einem montierten Zustand (hier nicht dargestellt) verschlossen ist. Ebenfalls sichtbar sind die über den Umfang des Deckels 3 verteilten multiplen Haltemittel 25, welche zum Wirkverbinden des Deckels 3 mit dem Dosenkörper 2 respektive zum Verschliessen der Installationsöffnung 7 dienen.

In der dargestellten Variante umfasst der Deckel 3 an einer von dem Installationsraum 6 wegweisenden Montageseite 8 eine Vertiefung 9, in welche ein durch ein Befestigungsmittel 11 lösbar gehaltener Magnet 10 angeordnet ist. Dieser dient zur temporären Befestigung der Installationsdose 1 an einer metallischen Schalungswand (nicht sichtbar). Um die Vertiefung 9 ist ein umlaufender Rand 22 angeordnet, welcher in einem gewissen Abstand zu der Vertiefung 9 bzw. dem Magneten 10 angeordnet ist. Der Rand 22 dient im montierten Zustand als Auflage- bzw. Dichtungsmittel des Deckels 3 gegenüber der Schalung und verhindert, dass beim Vergiessen Beton auf eine von dem umlaufenden Rand 22 umgebene Fläche gelangt bzw. bis zum Magneten 10 vordringt. Die Fläche zwischen dem Rand 22 und der Vertiefung 9 ist als eine strukturiere Fläche 23 ausgebildet. Diese wird nach der Entfernung der Schalung und des Magnets 10 verputzt. Die strukturierte Fläche 23 unterstützt hierbei die Verbindung des Verputzes mit der Installationsdose 1.

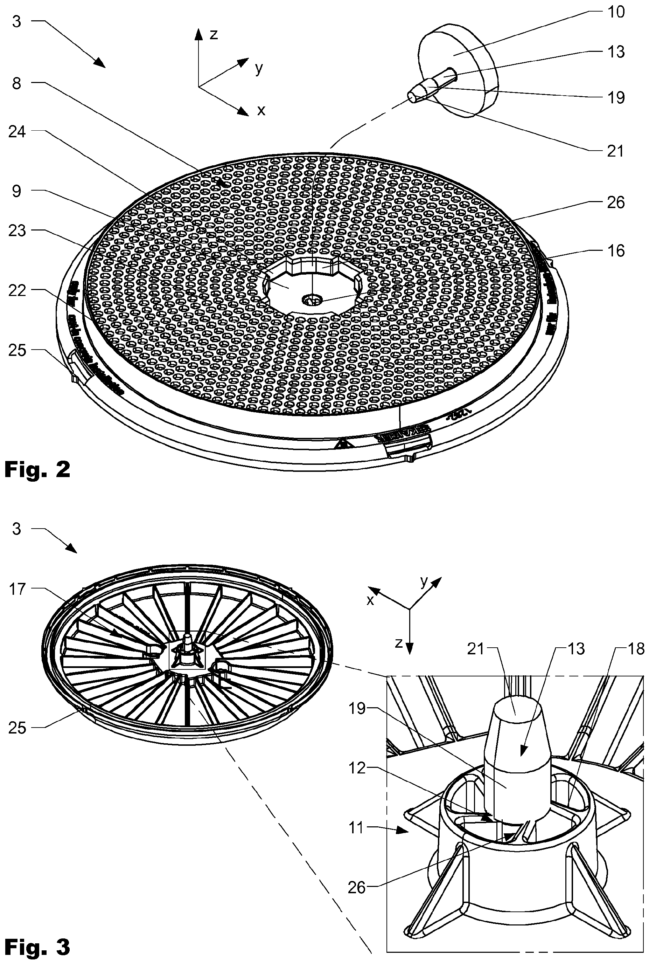

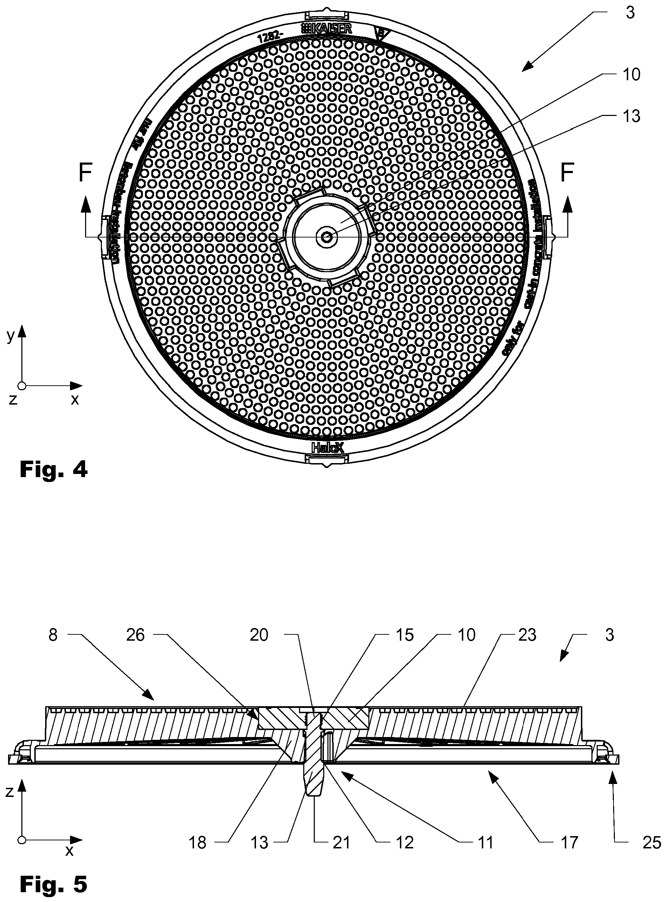

Die Vertiefung 9 und der Magnet 10 sind im Detail in **Figur 2** zu erkennen. **Figur 2** zeigt den Deckel 3 und den Magneten 10 in einem auseinandergebauten Zustand. Es ist zu erkennen, dass angrenzend an die Vertiefung 9, welche den Magneten 10 aufnimmt, weitere Aussparungen 24 angeordnet sind, die ggf. zum manuellen Entnehmen des Magnets 10 aus dem Deckel 3 dienen können. Der Magnet ist über einen Zapfen 13 mit dem Befestigungsmittel 11 wirkverbunden, welcher nichtmagnetisch ausgebildet sein muss. Der Zapfen 13 und der Magnet sind hier über ein Gewinde 15, angeordnet an einem ersten Ende 20 des Zapfens, miteinander wirkverbunden. An einem zweiten Ende 21 des Zapfens 13 befindet sich weitergehend eine Verdickung 19. Die Verdickung 19 bildet zusammen mit dem Deckel 3 einen Hinterschnitt 12 in eine Entnahmerichtung (z) des Magnets 10. Die Entnahmerichtung ist in dem gezeigten Fall senkrecht zur Schalungswand angeordnet. Zur Bildung des Hinterschnitts 12 wird der Zapfen 13 durch eine Durchgangsöffnung 16 durch den Deckel 3 gesteckt, wie in **Figur 3** und in der Schnittdarstellung der **Figur 5** (gemäss **Figur 4**) näher dargestellt. Auf einer Innenseite 17 des Deckels 3, welche zum Installationsraum 6 hingewandt ist, ragt der Zapfen 13 aus der Durchgangsöffnung 16 heraus. Von der Innenseite 17 und der Durchgangsöffnung 16 abgehende Rippen 18 bilden in der gezeigten Variante mit der Verdickung 19 den Hinterschnitt 12. Es ist jedoch ebenfalls denkbar, dass der Hinterschnitt 12 durch den Deckel 3, bzw. dessen Wandung (gebildet durch das Material zwischen der Montageseite 8 und der Innenseite 17) und der Verdickung 19 des Zapfens 13 gebildet wird. Zusätzlich oder alternativ zu dem Hinterschnitt 12 kann der Magnet 10 durch eine weitere Klemmmittel 26 befestigt werden. In der gezeigten Variante kann der Magnet 10 einerseits von den Seitenflächen der Vertiefung 9 gehalten, respektive geklemmt, werden. Andererseits kann alternativ oder in Ergänzung ebenfalls der Zapfen 13 von den entsprechenden Rippen 18 in radiale Richtung gehalten werden, welche somit ebenfalls als Klemmmittel 26 fungieren.

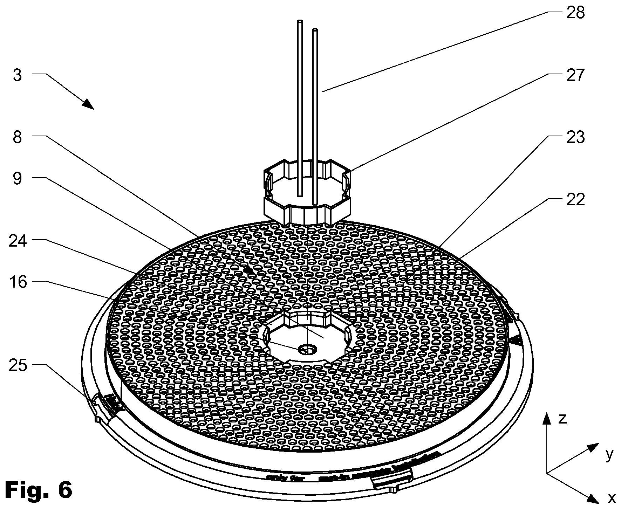

**Figur 6** zeigt eine zweite mögliche Anwendung der Vertiefung 9 des Deckels 3, nachdem der Magnet 10 durch die Schalung von dem Deckel 3 abgetrennt wurde. Hierzu ist der Hinterschnitt 12 so ausgeführt, dass dieser den Magnet bis zum Erreichen eines definierten Kraftniveaus hält und danach freigibt. Das Kraftniveau ist tiefer angesetzt als die entsprechende Haltekraft des Magnets 10 gegenüber der Schalung. Wenn die Schalung also entfernt wird, haftet der Magnet 10 an der Schalung während der Deckel 3 auf dem Dosenkörper 2 in der gegossenen Wand verbleibt. In einem weiteren Bearbeitungsschritt wird der Deckel 3 und der dahinterliegende Dosenkörper 2 gemeinsam mit der Wand verputzt. Vor dem Verputzen der Wand, kann in die Vertiefung 9 und/oder die Aussparung 24 des Deckels 3 ein entsprechend geformter Einsatz 27 eingelassen werden. Der Einsatz 27 kann eine Anzeigevorrichtung 28 umfassen, welche nach dem Verputzen des Deckels 3 aus dem Putz hervorsteht und einem Monteur anzeigt, an welcher Position der verputzen Wand sich die Installationsdose 1 befindet.

**LISTE DER BEZUGSZEICHEN**

| | | | |
|---|---|---|---|
| 1 | Installationsdose | 16 | Durchgangsöffnung |
| 2 | Dosenkörper | 17 | Innenseite |
| 3 | Deckel | 18 | Rippen |
| 4 | Dosenboden | 19 | Verdickung |
| 5 | Dosenwand | 20 | Erstes Ende (Zapfen) |
| 6 | Installationsraum | 21 | Zweites Ende (Zapfen) |
| 7 | Installationsöffnung | 22 | Rand |
| 8 | Montageseite | 23 | Strukturierte Fläche |
| 9 | Vertiefung | 24 | Aussparung |
| 10 | Magnet | 25 | Haltemittel |
| 11 | Befestigungsmittel | 26 | Klemmmittel |
| 12 | Hinterschnitt | 27 | Einsatz |
| 13 | Zapfen | 28 | Anzeigevorrichtung |
| 14 | Rohreinführung | | |
| 15 | Gewinde | | |

## Patentansprüche

1. Installationsdose (1) umfassend einen Dosenkörper (2) und einen Deckel (3),
a. wobei der Dosenkörper (2) einen Dosenboden (4) und eine an den Dosenboden (4) angrenzende Dosenwand (5) umfasst, welche einen Installationsraum (6) bilden;
b. dem Dosenboden (4) gegenüberliegend befindet sich eine Installationsöffnung (7) welche Zugang zum Installationsraum (6) erlaubt und von dem Deckel (3) in einem montierten Zustand verschlossen ist;
c. der Dosenboden (4) und/oder der Deckel (3) an einer von dem Installationsraum (6) wegweisenden Montageseite (8) eine Vertiefung (9) umfasst, in welcher ein durch ein Befestigungsmittel (11) lösbar gehaltener Magnet (10) angeordnet ist, der zum temporären Befestigen der Installationsdose (1) an einer Schalungswand dient,
d. wobei der Magnet (10) über einen Zapfen (13) mit dem Befestigungsmittel (11) wirkverbunden ist, **dadurch gekennzeichnet, dass** das Befestigungsmittel (11) in einer Entnahmerichtung des Magnets (10) mit diesem über einen Hinterschnitt zusammenwirkt, welcher den Magneten (10) in der Entnahmerichtung bis zum Erreichen eines definierten Kraftniveaus hält und danach freigibt.

2. Installationsdose (1) gemäss Patentanspruch 1, **dadurch gekennzeichnet, dass** der Magnet (10) gegenüber dem Befestigungsmittel (11) weiter durch Reibschluss gehalten ist.

3. Installationsdose (1) gemäss einem der vorangehenden Patentansprüche, **dadurch gekennzeichnet, dass** der Hinterschnitt zwischen dem Magnet (10) und dem Befestigungsmittel (11) ausgebildet ist.

4. Installationsdose (1) gemäss einem der vorangehenden Patentansprüche, **dadurch gekennzeichnet, dass** das Kraftniveau 30% bis 60% der Haltekraft des Magnets (10) entspricht.

5. Installationsdose (1) gemäss einem der vorangehenden Patentansprüche, **dadurch gekennzeichnet, dass** der Dosenboden (4) als abnehmbarer Deckel (3) ausgestaltet ist, welcher über eine zweite Installationsöffnung Zugang zum Installationsraum (6) ermöglicht.

6. Installationsdose (1) gemäss einem der vorangehenden Patentansprüche, **dadurch gekennzeichnet, dass** das Befestigungsmittel (11) auf einer Innenseite (17) des Deckels (3) im Bereich des Installationsraumes (6) angeordnet ist.

7. Installationsdose (1) gemäss Patentanspruch 6, **dadurch gekennzeichnet, dass** zwischen dem Befestigungsmittel (11) und der Vertiefung (9) eine Durchgangsöffnung (16) angeordnet ist.

8. Installationsdose (1) gemäss einem der vorangehenden Patentansprüche, **dadurch gekennzeichnet, dass** das Befestigungsmittel (11) mindestens eine deformierbare Rippe (18) umfasst.

9. Installationsdose (1) gemäss einem der vorangehenden Patentansprüche, **dadurch gekennzeichnet, dass** die Vertiefung (9) von einem umlaufenden Rand (22) umgeben ist, welcher zur Abstützung der Installationsdose (1) gegenüber der Metallschalung dient.

10. Installationsdose (1) gemäss Patentanspruch 9, **dadurch gekennzeichnet, dass** der umlaufende Rand (22) eine Dichtung umfasst

11. Installationsdose (1) gemäss Patentanspruch 9 oder 10, **dadurch gekennzeichnet, dass** der Deckel (3) und/oder der Dosenboden (4) zwischen dem umlaufenden Rand (22) und dem Magneten (10) eine strukturierte Fläche (23) aufweist.

12. Installationsdose (1) gemäss einem der vorangehenden Patentansprüche, **dadurch gekennzeichnet, dass** der Zapfen (13) an einem Ende (20) zur Bildung des Hinterschnitts (12) eine radiale Verdickung (19) aufweist.

13. Installationsdose (1) gemäss einem der vorangehenden Patentansprüche, **dadurch gekennzeichnet, dass** die Vertiefung (9) alternativ einen Einsatz (27) mit einer Anzeigevorrichtung (28) zum Anzeigen einer Position der Installationsdose (1) aufnimmt.

## Claims

1. Installation box (1) comprising a box body (2) and a cover (3),
a. wherein the box body (2) comprises a box base (4) and, adjacent to the box base (4), a box wall (5), said box base (4) and said box wall (5) forming an installation space (6);
b. an installation opening (7) which permits access to the installation space (6) and in an assembled state is closed by the cover (4) being situated opposite the box base (4);
c. the box base (4) and/or the cover (3) on an assembly side (8) that faces away from the installation space (6) comprise a recess (9) in which a magnet (10) is arranged which is releasably held by a fastening means (11) and serves for temporarily fastening the installation box (1) to a shuttering wall;
d. wherein the magnet (10) by way of a stud (13) is operatively connected to the fastening means (11), **characterized in that** the fastening means (11) in a retrieval direction of the magnet (10) interacts with the latter by way of an undercut which in the retrieval direction holds the magnet (10) until a defined force level is reached and thereafter releases said magnet (10).

2. Installation box (1) according to Patent Claim 1, **characterized in that** the magnet (10) in relation to the fastening means (11) is furthermore held by a frictional engagement.

3. Installation box (1) according to one of the preceding patent claims, **characterized in that** the undercut is formed between the magnet (10) and the fastening means (11).

4. Installation box (1) according to one of the preceding patent claims, **characterized in that** the force level corresponds to 30% to 60% of the holding force of the magnet (10).

5. Installation box (1) according to one of the preceding patent claims, **characterized in that** the box base (4) is designed as a removable cover (3) which by way of a second installation opening enables access to the installation space (6).

6. Installation box (1) according to one of the preceding claims, **characterized in that** the fastening means (11) is disposed on an internal side (17) of the cover (3), in the region of the installation space (6).

7. Installation box (1) according to patent claim 6, **characterized in that** a passage opening (16) is arranged between the fastening means (11) and the recess (9).

8. Installation box (1) according to one of the preceding patent claims, **characterized in that** the fastening means (11) comprises at least one deformable rib (18).

9. Installation box (1) according to one of the preceding patent claims, **characterized in that** the recess (9) is surrounded by an encircling flange (22) which serves for supporting the installation box (1) in relation to the metal shuttering.

10. Installation box (1) according to Patent Claim 9, **characterized in that** the encircling periphery (22) comprises a seal.

11. Installation box (1) according to Patent Claim 9 or 10, **characterized in that** the cover (3) and/or the box base (4) have/has a structured face (23) between the encircling periphery (22) and the magnet (10).

12. Installation box (1) according to one of the preceding patent claims, **characterized in that** the stud (13) at one end (20) has a radial thickening (19) for forming the undercut (12).

13. Installation box (1) according to one of the preceding patent claims, **characterized in that** the recess (9) alternatively receives an insert (27) having a display device (28) for displaying a position of the installation box (1).

## Revendications

1. Boîte d'installation (1) comportant un corps de boîte (2) et un couvercle (3),
a. le corps de boîte (2) comportant un fond de boîte (4) et une paroi de boîte (5) adjacente au fond de boîte (4), lesquels forment un espace d'installation (6);
b. une ouverture d'installation (7) se trouvant en regard du fond de boîte (4), laquelle permet un accès à l'espace d'installation (6) et est fermée par le couvercle (3) dans un état monté;
c. le fond de boîte (4) et/ou le couvercle (3) comportant, sur un côté de montage (8) opposé à l'espace d'installation (6), un évidement (9) dans lequel est disposé un aimant (10) retenu de manière amovible par le biais d'un moyen de fixation (11), lequel aimant sert à la fixation temporaire de la boîte d'installation (1) à une paroi de coffrage,
d. l'aimant (10) étant relié fonctionnellement au moyen de fixation (11) par le biais d'un tenon (13), **caractérisée en ce que** le moyen de fixation (11) coopère, dans une direction de prélèvement de l'aimant (10), avec celui-ci par le biais d'une contre-dépouille, laquelle retient l'aimant (10) dans le direction de prélèvement jusqu'à ce qu'un niveau de force défini soit atteint et le libère ensuite.

2. Boîte d'installation (1) selon la revendication 1, **caractérisée en ce que** l'aimant (10) est retenu en outre par engagement par friction par rapport au moyen de fixation (11).

3. Boîte d'installation (1) selon l'une des revendications précédentes, **caractérisée en ce que** la contre-dépouille est formée entre l'aimant (10) et le moyen de fixation (11).

4. Boîte d'installation (1) selon l'une des revendications précédentes, **caractérisée en ce que** le niveau de force correspond à 30% à 60% de la force de retenue de l'aimant (10).

5. Boîte d'installation (1) selon l'une des revendications précédentes, **caractérisée en ce que** le fond de boîte (4) est configuré en tant que couvercle (3) amovible, lequel rend possible l'accès à l'espace d'installation (6) par le biais d'une deuxième ouverture d'installation.

6. Boîte d'installation (1) selon l'une des revendications précédentes, **caractérisée en ce que** le moyen de fixation (11) est disposé sur un côté intérieur (17) du couvercle (3) dans la région de l'espace d'installation (6).

7. Boîte d'installation (1) selon la revendication 6, **caractérisée en ce qu'**une ouverture traversante (16) est disposée entre le moyen de fixation (11) et l'évidement (9).

8. Boîte d'installation (1) selon l'une des revendications précédentes, **caractérisée en ce que** le moyen de fixation (11) comporte au moins une nervure déformable (18).

9. Boîte d'installation (1) selon l'une des revendications précédentes, **caractérisée en ce que** l'évidement (9) est entouré par un bord périphérique (22), lequel sert au support de la boîte d'installation (1) par rapport au coffrage métallique.

10. Boîte d'installation (1) selon la revendication 9, **caractérisée en ce que** le bord périphérique (22) comporte un joint d'étanchéité.

11. Boîte d'installation (1) selon la revendication 9 ou 10, **caractérisée en ce que** le couvercle (3) et/ou le fond de boîte (4) présente(nt) une surface structurée (23) entre le bord périphérique (22) et l'aimant (10).

12. Boîte d'installation (1) selon l'une des revendications précédentes, **caractérisée en ce que** le tenon (13) comprend un renflement radial (19) à une extrémité (20) pour la formation de la contre-dépouille (12).

13. Boîte d'installation (1) selon l'une des revendications précédentes, **caractérisée en ce que** l'évidement (9) reçoit en variante un insert (27) doté d'un dispositif d'affichage (28) servant à l'affichage d'une position de la boîte d'installation (1) .
